# EUROPÄISCHE PATENTSCHRIFT

(11) **EP 1 748 697 B1**
(45) Veröffentlichungstag und Bekanntmachung des Hinweises auf die Patenterteilung: **31.10.2012**
(21) Anmeldenummer: 05742768.4
(22) Anmeldetag: 12.05.2005
(51) Int. Cl.: A22C 11/02

(54) **AUFHÄNGUNG FÜR EIN FÜLLROHR ZUM ABFÜLLEN VON WÜRSTEN**
SUSPENSION FOR A SAUSAGE FILLING PIPE
SUSPENSION POUR TUBE DE REMPLISSAGE, POUR BOURRER DES SAUCISSES

(30) Priorität: 12.05.2004 DE 202004007788 U
(43) Veröffentlichungstag der Anmeldung: 07.02.2007
(73) Patentinhaber: TIPPER TIE technopack GmbH, 21509 Glinde (DE)
(72) Erfinder: KRUSE, Holger, 22145 Hamburg (DE)
(74) Vertreter: Glawe, Delfs, Moll
(86) Internationale Anmeldenummer: PCT/EP2005/005186
(87) Internationale Veröffentlichungsnummer: WO 2005/110099

(56) Entgegenhaltungen:
- DE-A1- 1 632 143
- FR-A- 2 780 246
- US-A- 3 964 236
- US-A- 4 893 377

## Beschreibung

Die Erfindung betrifft eine Aufhängung für ein Füllrohr zum Abfüllen von Würsten nach dem Oberbegriff des Schutzanspruchs 1. Eine derartige Vorrichtung ist aus FR 2780246 bekannt.

Beim Abfüllen von Würsten wird Wurstbrät in pastöser Form in den schlauchförmigen Wurstdarm gefüllt und der Wurstdarm dann abschnittsweise verschlossen. Die so abgeteilten Abschnitte sind dann die einzelnen Würste. Üblicherweise füllt eine Füllmaschine das Brät in das eine Ende eines Füllrohrs. Über das andere, freie Ende ist ist der leere Wurstdarm gezogen. Da der Darm am freien Ende einseitig verschlossen ist, wird er gefüllt und durch den Druck nach nachstoßenden Bräts nach und nach vom Rohr abgezogen. Der so gefüllte Darm wird dann einer Verschlussmaschine zugeführt, die ihn abschnittsweise verschließt.

Das freie Ende des Füllrohrs befindet sich verhältnismäßig dicht an der Verschlussmaschine. Aus Platzgründen ist es deshalb praktisch unmöglich, einen Wurstdarm auf das Füllrohr zu ziehen, wenn sich das Füllrohr in seiner Betriebsstellung befindet. Deshalb wird das Füllrohr üblicherweise verschwenkbar ausgestaltet, so dass das freie Ende bequem zugänglich ist und ein neuer Darm leicht aufgezogen werden kann. Im Einzelnen besteht eine gattungsgemäße Aufhängung demnach aus einem Füllrohr-Stutzen, der entweder Teil des Rohrs ist oder an dem das Rohr beispielsweise durch Anschrauben befestigt werden kann, und einem zu dem Füllrohr-Stutzen passenden Füllmaschinen-Stutzen. Der Füllmaschinen-Stutzen kann fester Bestandteil Teil der Füllmaschine oder mit dieser verbindbar sein. Er kann aber auch Teil der Verschlussmaschine oder mit dieser verbindbar bzw. eine vollständig unabhängige Vorrichtung sein. Entscheidend ist, dass er vom Füllrohr aus gesehen auf den Füllrohr-Stutzen folgt. Indem der Füllrohr-Stutzen gegenüber dem Füllmaschinen-Stutzen verschwenkbar ist, ist auch die zum Aufziehen eines neuen Darms erforderliche Verschwenkbarkeit des Füllrohrs gegeben.

Für den Fall, dass die Aufhängung gereinigt werden muss, ist im Stand der Technik regelmäßig zusätzlich eine Lösbarkeit des Füllrohr-Stutzens vom Füllmaschinen-Stutzen vorgesehen worden. Für die Reinigung kann der Füllrohr-Stutzen also von der gesamten Vorrichtung getrennt und dann z.B. auf einem Tisch gesäubert werden.

Dies ist jedoch umständlich und angesichts des im Regelfall nicht unbeträchtlichen Gewichts des Füllrohr-Stutzens nicht ganz ungefährlich.

Die Erfindung stellt sich somit die Aufgabe, eine einfachere und sicherere Reinigung des Füllrohr-Stutzens zu ermöglichen.

Sie löst diese Aufgabe durch die Merkmale des kennzeichnenden Teils des Schutzanspruchs 1.

Dabei können der Füllrohr-Stutzen und der Füllmaschinen-Stutzen beliebig ausgestaltet sein. Entscheidend ist, dass mit ihnen eine Verbindung von Füllrohr und Füllmaschine herstellbar ist.

Die erste Schwenkachse muss so positioniert sein, dass das freie Ende des Füllrohrs beim Schwenken des Füllrohr-Stutzens um diese Achse freikommen kann, d.h. das ein Darm bequem aufziehbar ist. Im Übrigen kann die Schwenkbarkeit auf beliebige Weise erreicht werden. Schwenkbarkeit im Sinne der Erfindung schließt auch Drehbarkeit ein, d.h. eine Drehbarkeit um den Schwerpunkt des Stutzens ohne Ortsveränderung des Schwerpunkts.

Die zweite Schwenkachse kann eine beliebige Position außer der der ersten haben. Die Reinigungsposition ist eine Position, in der eine einfachere Reinigung des noch am Gestell befindlichen Füllrohr-Stutzens möglich ist. Vorteilhafterweise ist die Lage der Reinigungsposition derart, dass sie nach einer Schwenkung des Gestells um die zweite Achse um 90° oder mehr erreicht wird. Besonders vorteilhaft ist eine Schwenkbarkeit um etwa 180°, also mehr als 170°, da der Füllrohr-Stutzen dann am besten zugänglich wird.

Weiter kann das Gestell, an dem der Füllrohr-Stutzen angeordnet ist, nahezu beliebig ausgestaltet sein. Es muss allerdings den Füllrohr-Stutzen auch bei angesetztem Füllrohr halten können. Ist es in die Reinigungsposition geschwenkt, so muss es wenigstens den Füllrohr-Stutzen ohne das Füllrohr stabil halten können. Stabil bedeutet, dass keine Stützung durch den Benutzer erforderlich ist, um den Füllrohr-Stutzen in der Position zu halten. Der Benutzer hat dann beide Hände frei, um einen Schlauch und sonstige Reinigungswerkzeuge zu ergreifen und zu bedienen. Weiter muss die Schwenkbarkeit des Füllrohr-Stutzens wieder in der Weise gegeben sein, dass das freie Ende des angesetzten Füllrohrs freikommen kann.

Vorteilhafterweise ist der Füllrohr-Stutzen in wenigstens einer Reinigungsposition des Gestells gegenüber diesem um eine Reinigungsachse schwenkbar. Damit kann der Benutzer durch Schwenken des Stutzens im Gestell leichter mehrere zu reinigende Stellen erreichen. Die Schwenkbarkeit um die Reinigungsachse kann besonders einfach dadurch erreicht werden, dass die erste Achse, die durch Schwenken des Gestells versetzt worden ist, als Reinigungsachse vorgesehen wird. Besonders vorteilhaft ist es dabei, wenn eine Schwenkung um 360° möglich ist, da dann alle Seiten des Stutzens für den Benutzer bequem von einer Seite aus zugänglich sind.

Vorteilhafterweise ist das Gestell in einer Betriebsstellung gegenüber dem Füllmaschinen-Stutzen arretierbar. Die Betriebsstellung ist dabei die Stellung, in der die Füllmaschine Wustbrät in das Füllrohr füllen kann. Gegenüber dem Füllmaschinen-Stutzen arretierbar bedeutet, dass das Gestell in arretierter Stellung nicht gegenüber dem Füllmaschinen-Stutzen bewegt werden kann.

Nachfolgend wird ein Ausführungsbeispiel der Erfindung anhand von Zeichnungen näher erläutert. Es zeigen:
- Fig. 1:: eine schematische Darstellung einer erfindungsgemäßen Aufhängung zwischen einer Füll- und einer Verschlussmaschine in der Seitenansicht;
- Fig. 2:: ebenfalls in schematischer Darstellung dieselbe Aufhängung in perspektivischer Ansicht;
- Fig. 3:: dieselbe Aufhängung in Reinigungsposition in derselben Ansicht.

Zwischen einer als angeschnittener Block dargestellten Füllmaschine 1 und einer ebenso dargestellten Verschlussmaschine 2 ist ein Füllrohr 3 angeordnet. Das Füllrohr 3 ist an die Füllmaschine 1 über eine Aufhängung angeschlossen, die einen Füllrohr-Stutzen 4 und einen Füllmaschinen-Stutzen 5 umfasst. Das Füllrohr 3 ist mit dem Füllrohr-Stutzen 4 z.B. durch Verschraubung verbunden, in ähnlicher Weise die Füllmaschine 1 mit dem Füllmaschinen-Stutzen 5.

Am Füllmaschinen-Stutzen 5 ist ein Bügel 6 angeordnet, der seitlich vom Stutzen 5 abgeht, dann eine Biegung von der Füllmaschine weg aufweist und an seinem Ende eine längliche Hülse 7 hält. Der Bügel 6 muss nicht unbedingt am Füllmaschinen-Stutzen 5 angeordnet sein, denkbar ist auch eine Anordnung an der Füllmaschine 1. Im Inneren der Hülse 7 ist in nicht gezeigter Weise ein Bolzen drehbar gelagert. Die Enden dieses Bolzen ragen über die beiden Enden der Hülse 7 hinaus und sind in einem Rahmen 8 befestigt. Der Rahmen 8 bildet zusammen mit dem Bolzen ein erfindungsgemäßes Gestell.

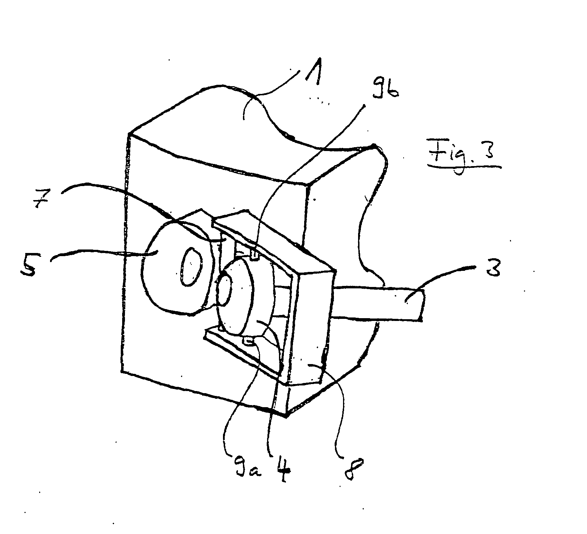

In dem Rahmen 8 sind einander gegenüberliegend zwei Bolzen 9a und 9b angeordnet. Diese fassen in nicht dargestellte Bohrungen im Füllrohr-Stutzen 4. Auf diese Weise wird eine Schwenkbarkeit des Füllrohr-Stutzens um eine erste Achse im Sinne der Erfindung erreicht. Wie in Fig. 3 zu erkennen, ist die Fläche des Füllrohr-Stutzens 4, die mit dem Füllmaschinen-Stutzen 5 in Berührung kommt, sphärisch konvex gewölbt und die entsprechende Fläche des Füllmaschinen-Stutzens 5 komplementär konkav gewölbt. Dadurch bleiben die Flächen bei einer leichten Schwenkung des Füllrohrs 3, wie sie zum Aufziehen eines neuen Darms ausreicht, miteinander in Kontakt, so dass beim Aufziehen des Darms kein oder nur wenig Brät verloren geht. Denkbar wäre auch, hier mit Zylinderflächen zu arbeiten.

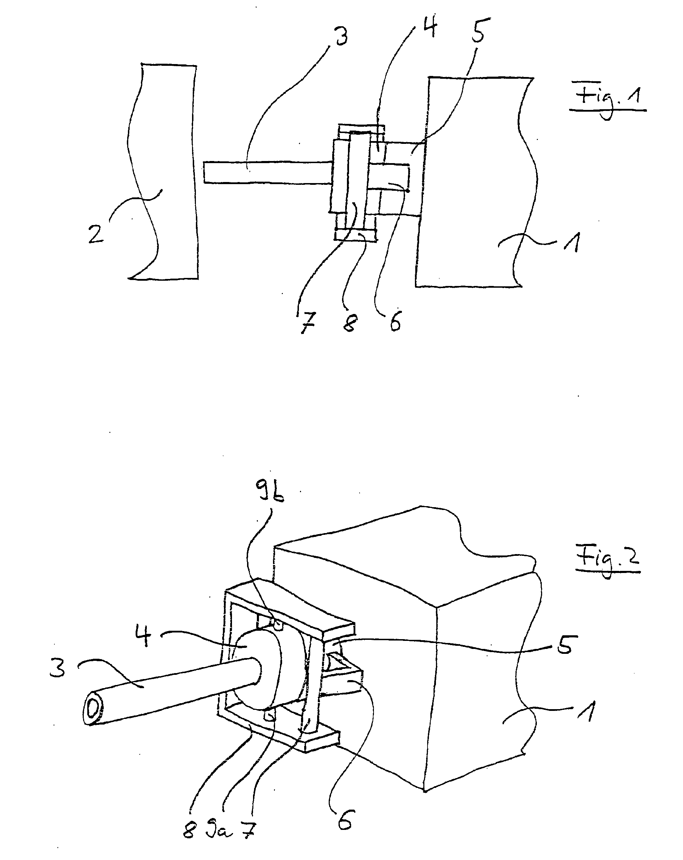

In nicht näher gezeigter Weise kann am Rahmen 8 eine Arretierung gegenüber dem Füllmaschinen-Stutzen angeführt sein, beispielsweise durch einen Klemmmechanismus, von dem die eine Komponente auf der der Hülse 7 gegenüber liegenden Seite des Rahmens 8 und die andere Komponente an der Füllmaschine 1 oder am Füllmaschinen-Stutzen 5 angeordnet ist. Dadurch kann das Gestell und mit ihm der Füllrohr-Stutzen in der in den Fig. 1 und 2 gezeigten Betriebsstellung arretiert werden.

## Patentansprüche

1. Aufhängung für ein Füllrohr (3) zum Abfüllen von Würsten mit einem Füllrohr-Stutzen (4) und einem Füllmaschinen-Stutzen (5), wobei der Füllrohr-Stutzen (4) gegenüber dem Füllmaschinen-Stutzen (5) um eine erste Schwenkachse schwenkbar ist, **dadurch gekennzeichnet, dass** der Füllrohr-Stutzen (4) an einem Gestell (8) angeordnet ist und gegenüber diesem um die erste Schwenkachse schwenkbar ist und das Gestell (8) seinerseits mitsamt dem Füllrohr-Stutzen (4)gegenüber dem Füllmaschinen-Stutzen (5) um eine zweite Schwenkachse in wenigstens eine Reinigungsposition schwenk bar ist, in der es den Füllrohr-Stutzen (4) stabil hält.

2. Aufhängung nach Schutzanspruch 1, **dadurch gekennzeichnet, dass** der Füllrohr-Stutzen (4) in wenigstens einer Reinigungsposition des Gestells (8) gegenüber diesem um eine Reinigungsachse schwenkbar ist.

3. Aufhängung nach Schutzanspruch 2, **dadurch gekennzeichnet, dass** der Füllrohr-Stutzen (4) um die Reinigungsachse um 360° schwenkbar ist.

4. Aufhängung nach einem der vorhergehenden Schutzansprüche, **dadurch gekennzeichnet, dass** das Gestell (8) in einer Betriebsstellung gegenüber dem Füllmaschinen-Stutzen (5) arretierbar ist.

## Claims

1. Suspension for a sausage filling pipe (3), with a filling pipe connection piece (4) and a filling machine connection piece (5), the filling pipe connection piece (4) being pivotable in relation to the filling machine connection piece (5) about a first pivot axis, **characterized in that** the filling pipe connection piece (4) is arranged on a frame (8) and is pivotable in relation to the latter about the first pivot axis, and the frame (8), for its part, is pivotable together with the filling pipe connection piece (4) in relation to the filling machine connection piece (5) about a second pivot axis into at least one cleaning position in which it holds the filling pipe connection piece (4) in a stable manner.

2. Suspension according to Patent Claim 1, **characterized in that**, in at least one cleaning position of the frame (8), the filling pipe connection piece (4) is pivotable in relation to said frame about a cleaning axis.

3. Suspension according to Patent Claim 2, **characterized in that** the filling pipe connection piece (4) is pivotable through 360° about the cleaning axis.

4. Suspension according to one of the preceding patent claims, **characterized in that** the frame (8) is lockable in relation to the filling machine connection piece (5) in an operating position.

## Revendications

1. Suspension pour tube de remplissage (3) pour bourrer des saucisses, avec une tubulure de tube de remplissage (4) et une tubulure de machine de remplissage (5), sachant que la tubulure de tube de remplissage (4) peut être pivotée par rapport à la tubulure de machine de remplissage (5) autour d'un premier axe de pivotement, **caractérisée en ce que** la tubulure de tube de remplissage (4) est disposée sur un bâti (8) et peut être pivotée par rapport à celui-ci autour du premier axe de pivotement et le bâti (8) peut être pivoté de son côté avec la tubulure de tube de remplissage (4) par rapport à la tubulure de machine de remplissage (5) autour d'un second axe de pivotement dans au moins une position de nettoyage, dans laquelle il assure la stabilité de la tubulure de tube de remplissage (4).

2. Suspension selon la revendication 1, **caractérisée en ce que** la tubulure de tube de remplissage (4) peut être pivotée dans au moins une position de nettoyage du bâti (8) par rapport à
celui-ci autour d'un axe de nettoyage.

3. Suspension selon la revendication 2, **caractérisée en ce que** la tubulure de tube de remplissage (4) peut être pivotée de 360° autour de l'axe de nettoyage.

4. Suspension selon l'une quelconque des revendications précédentes, **caractérisée en ce que** le bâti (8) peut être arrêté dans une position de service par rapport à la tubulure de machine de remplissage (5).
